# EUROPEAN PATENT APPLICATION

(11) **EP 1 641 105 A2**
(43) Date of publication of application: **29.03.2006**
(21) Application number: 05021086.3
(22) Date of filing: 27.09.2005
(51) Int. Cl.: H02K 5/22

(54) **Motor lead sealing system and method**

(30) Priority: 28.09.2004 US 951349
(71) Applicant: Reliance Electric Technologies, LLC, Mayfield Heights, Ohio 44124 (US)
(72) Inventor: Woodson, William Tucker, Pelzer SC 29669 (US)
(74) Representative: Jung HML

(57) **Abstract**

An assembly having an externally threaded pipe nipple with an inserted grommet couples to a motor frame and to a conduit box, supporting the conduit box to the motor frame and providing a pathway for the motor lead through the grommet and nipple into the conduit box. The conduit box is configured to connect motor lead connections to the incoming power supply. A sealing material, such as a fluid elastomeric material, is poured into the pipe nipple and allowed to cure. The grommet abuts against a stop portion of the pipe nipple, retaining the sealing material. A nut having external threads mates with internal threads of the pipe nipple. As the nut is rotated and tightened, it compresses the sealing material against the inner surface of the pipe nipple and against the motor lead wires, and thus seals the electrical connections within the conduit box from the motor and environment.

## Description

### BACKGROUND

The present invention relates generally to the field of power supply to machines, such as electric motors. More particularly, the invention relates to a novel technique for sealing power leads of electric motors.

A wide variety of machines powered by electricity are employed throughout a range of industrial applications. For example, induction motors convert electrical power to mechanical power to drive pumps, conveyors, compressors, fans, and so forth. In the operation of an induction motor, the electrical power is applied to a stator to produce a rotating magnetic field to a drive a rotor in rotation. Mechanical power is then transmitted via an output shaft coupled to the rotor.

Electricity may be supplied to induction motors and other machines from an external power source through a power cable. A typical industrial power cable may include solid or stranded conductor wires surrounded by insulation, shielding, and a protective jacket. For three phase power, there are typically at least three conductor wires within the power cable that supply electricity to the machine or motor. The power cable may be routed to the motor through a cable tray, encasing conduit (i.e., a relatively rigid protective sheath), and so on. In a given industrial facility, the power cable (and surrounding conduit, for example) may be routed over a variety of distances and support structures.

At the machine or motor, the conductor wires with the power supply cable may connect to shorter power lead wires from the machine or motor. In the case of three-phase ac power supply, typically at least three motor lead wires connect to the incoming conductor wires. The electrical connections are commonly housed in a protective enclosure (e.g., junction box, terminal box, conduit box, etc.) which may be mounted on or near the motor. The enclosure (e.g., plastic, metal, etc.) may protect the electrical wiring connections from mechanical and weather damage, as well as from corrosive chemical damage. The protective enclosure may also reduce exposure of the electrical connections to flammable chemicals, dusts, and fibers in the surrounding environment which may be ignited by a flame or electrical spark. Indeed, industry and governmental standards for motor lead sealing requirements are directed, in part, to preventing ignition of flammable chemicals, dust, fibers, and so forth. Thus, the protective enclosure may prevent flames or sparks from traveling between the motor and the protective enclosure. In general, the type of sealing configuration of the motor electrical connections may depend on the particular application, environmental conditions, and regulatory requirements.

It may also be desirable that the conduit box satisfies the facility area electrical classification and/or the electrical classification rating of the motor. In general, the area classification depends on the concentration, frequency, and types of flammable and ignitable components present, and may provide a basis for equipment selection and design. As will be appreciated by those skilled in the art, such electrical (hazardous) classifications may include an explosion-proof rating, a class rating, a division rating, a group rating, a zone rating, a combination thereof, and so forth. Explosion proof, for example, is a term used to describe equipment capable of withstanding an explosion of a specified gas or vapor within the equipment, and capable of preventing the ignition of a specified gas or vapor surrounding the equipment. For an explosion-proof classification and other classifications, the motor may be designed (e.g., sealed) for environments containing hazardous gas, vapor, dust, fibers, or other materials that may have explosive properties. Therefore, the conduit box may be sealed to prevent atmospheric exchange between the box interior and the environment, and between the box interior and the motor.

To receive the power cable, the protective enclosure or conduit box may be mechanically coupled to the incoming conduit that surrounds the power cable. Similarly, the enclosure or box may be mechanically coupled to the motor (i.e., the motor frame) to receive the motor lead wires from within the motor frame. One approach for sealing the entry of the motor lead wires from the motor into the conduit box is to couple the box to the motor frame with a pipe nipple containing cement and the motor lead wires pulled from the interior of the motor frame into the conduit box. The cement is poured into the nipple to seal the conduit box from the motor frame and from the environment. This sealing approach, for now, is used to satisfy Underwriters Laboratories, Inc. (UL) certification in certain applications in the United States.

However, in other applications/certifications in the United States and other jurisdictions, the integrity of the seal with this approach is inadequate. For example, the technique often fails the Atmosphere Explosibles (ATEX) certification in Europe, where the filled nipple may be subjected to a temperature-pressure-color water certification test for flameproof seals. In this and other testing, the nipple filled with cement may be subjected to thermal cycles and pressurized with color water to detect leaks through the filled nipple. Such a test is regularly employed in Europe and other jurisdictions, and may become more commonly applied in the United States.

It is theorized that the use of a pipe nipple filled with cement fails more stringent applications and testing (e.g., ATEX certification testing relative to the current UL certification) and applications, because the cement does not thoroughly bond with the motor leads and the interior surface of the pipe nipple. Undesirable separation of the cement from the interior surface of the nipple, and from the motor leads, is thought to be promoted by the ATEX testing pressures and thermal cycles, for example. Indeed, the differing materials of the cement, and motor leads, and pipe nipple typically expand and contract at different rates. Thus, the adhesive bond between the cement and the inside diameter (interior surface) of the nipple, and between the cement and the motor leads, may break or be compromised, allowing fluid to leak through the filled nipple. The separation and lack of adhesive bonding may be further aggravated by Teflon® (e.g., polytetrafluoroethylene) coating of the motor lead wires. Indeed, where such a coating is employed, the fluid (i.e., colored water in the ATEX testing) is more likely to leak along the outer diameter of the motor lead wires.

Thus, for hazardous duty motors, testing standards for flameproof seals for European approval, for example, typically requires a lead seal technique that is different than filled-nipple technique commonly required and employed in the United States. Flameproof seals are designed to prevent penetration of an external explosive atmosphere into the enclosure, to prevent ignition of the external atmosphere from a flame or spark, and to withstand an internal explosion. Several organizations (e.g., certification bodies, test houses, industry and regulatory associations, etc.) in Europe, as well and the United States and throughout the world, may now or in the future require more stringent sealing techniques than the filled-nipple approach used to satisfy UL certification. Such organizations may include, for example, BASEEFA (British Approvals Service for Electrical Equipment in Flammable Atmospheres), SIRA (British Scientific Instrument Research Association), CSA (Canada Standards Association). Factory Mutual, Inc. (FM), and even Underwriters Laboratories, Inc. The National Electric Code (NEC), a governing code in the United States, generally requires a particular application to satisfy the certification requirements of the applicable jurisdiction, including those jurisdictions outside of the United States. It should be emphasized, however, that the present techniques are not limited to satisfying a particular standard, but may be directed, in general, to a number of applications where improved sealing of the motor lead wires and conduit box are desired.

To satisfy various standards (e.g., European standards) and a variety of other applications, a cable gland, instead of a pipe nipple filled with cement, may be employed to seal the leads. As will be appreciated by those skilled in the art, cable glands may employ a stuffing box, and may be specifically designed for penetration into the conduit box and to seal the conduit box, motor leads, and the motor interior from the environment. The cable gland may also be designed to inhibit propagation of a fire and an explosion. Choices for gland mounting include adhesive or compound, flanged or bolted, threaded or nut mount, welded or cast, and so on. Exemplary materials of construction available for glands include aluminum, steel, stainless, steel, and plastic. Unfortunately, cable glands are relatively elaborate and typically require multiple pieces and components, including, for example, an entry component, an elastomeric ferrule, an epoxy barrier compound, a combined compression spigot and armor clamping ring. Other cable-gland components may include a dedicated armor (or braid) clamping cone, a middle nut, an outer seal assembly (i.e., sleeve seal and support ring), a back nut, and so on. Thus, cable glands are relatively expensive, contributing significantly (e.g., 20-30%) to the cost of a typical motor. Also, cable glands, unlike a pipe nipple, normally cannot support the weight of a conduit box, and thus bracing must be installed to support the conduit box, adding even more cost to the motor installation.

Therefore, there is a need for a straightforward, inexpensive configuration for sealing motor leads into a conduit box, which is easy to install and better satisfies regulatory and testing standards throughout the world. The technique should provide for a tight seal, accommodate a variety of applications, such as with hazardous duty motors, and meet certification testing requirements in a variety of jurisdictions. For example, there is a need for a less expensive technique for sealing motor power leads to satisfy European testing standards for flameproof seals. Furthermore, there is a need for a more efficient technique for supporting the conduit box while satisfying more rigid testing standards.

### BRIEF DESCRIPTION

To respond to such needs, the present invention provides a novel technique for sealing power leads of electric motors. The present technique generally satisfies a variety of certification testing, such as that currently applied for ATEX certification of flameproof seals in Europe. The technique utilizes a coupling element, such as an externally threaded pipe nipple, to support the conduit box on the motor frame and to provide a sealable passageway for the motor lead wires. The nipple threads into both the conduit box and the motor frame, and mounts the conduit box to the motor, with no additional support of the conduit box required. A grommet is inserted inside the nipple and the motor lead wires are pulled through the grommet. The inside of the nipple is filled with a sealing material, such as an elastomeric material (e.g., epoxy, urethane, etc.), and the grommet retains the material. An externally-threaded nut rotates onto internal threads of the pipe nipple to compresses the sealing material against the inner diameter of the pipe nipple and against the motor leads, providing for a tight seal between the conduit box and the motor frame and environment. The internal diameter (surface) of the nipple may be tapered to facilitate compression of the sealing material. Also, the distance of the pipe nipple threads that engage the compression nut may be configured to give the desired amount of compressive force exerted by the nut on the sealing material. Other considerations may include, for example, the use of a compression washer.

In one example, a motor has a motor enclosure including first and second end portions and a frame disposed between the end portions. A stator assembly and rotor assembly are disposed within the motor enclosure. At least one motor lead wire electrically connects to the stator assembly and is configured to electrically connect to an external power supply. A protective enclosure is configured to house an electrical connection of the at least one motor lead wire to the external power supply. A coupling member is configured to mount the protective enclosure to the motor frame and to provide a sealable pathway for the at least one motor lead wire to enter the protective enclosure from the motor. A sealing material is disposed in an interior volume of the coupling member, and a compressing member configured to mate to the coupling member to compress the sealing material against an inner surface of the coupling member and against the at least one motor lead wire.

In another example, a lead sealing assembly for a motor includes a fitting having external threads configured to mate with threads of an enclosure and with threads of a motor frame. The fitting has an interior region configured to provide a pathway for at least one wire from the motor to the enclosure, wherein the enclosure is configured to house electrical connections of the motor. An externally threaded nut is configured to mate with internal threads at one end of the fitting. A grommet disposed at a another end of the fitting and configured to receive the at least one wire. The nut and grommet may partially seal the interior region of the fitting.

In yet another example, a method of sealing machine leads includes pulling at least one motor lead through the inside of a coupling element, mounting the coupling element to the motor frame, and pouring sealing material into the coupling element. Further, the method may include securing a compressing element to an end of the coupling element opposite the motor frame, and mounting an enclosure to the end of the coupling element opposite the motor frame, wherein the enclosure is configured to house an electrical connection of the at least one motor lead to a power supply.

### DRAWINGS

The foregoing and other advantages and features of the invention will become apparent upon reading the following detailed description and upon reference to the drawings in which:

FIG. 1 is a perspective view of an electric motor illustrating the various functional components of the motor including a power lead sealing assembly and a conduit box, in accordance with certain aspects of the invention;

FIG. 2 is a perspective view of a diagrammatical representation of the motor lead sealing assembly of FIG. 1;

FIG. 3 is a side view of a diagrammatical representation of the motor lead sealing assembly of FIGS. 1 and 2;

FIG. 4 is a side view of a nipple of the motor lead sealing assembly of FIGS. 2 and 3;

FIG. 5 is an end view of a compression nut of the motor lead sealing assembly of FIGS. 2 and 3, and that mate with the nipple of FIG. 4;

FIG. 6 is a sectional view of the compression nut illustrated in FIG. 5 sectioned through line 6-6;

FIG. 7 is a side view of an alternate nipple of a motor lead sealing assembly;

FIG. 8 is an end view of a compression nut that mates with the nipple of FIG. 7;

FIG. 9 is a sectional view of the nipple illustrated in FIG. 8 sectioned through line 9-9; and

FIG. 10 is a block diagram of a method for installing the motor lead sealing assembly illustrated in FIGS. 1-3.

### DETAILED DESCRIPTION

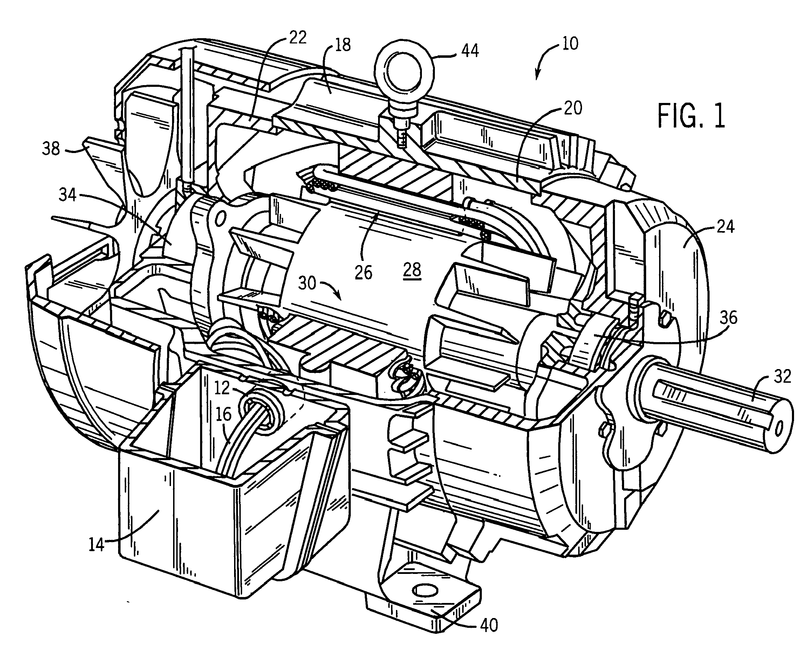

Turning now to the drawings, and referring first to FIG. 1, an exemplary electric motor is shown and designated generally by the reference numeral 10. In the illustrated embodiment, a nipple assembly or motor lead sealing assembly 12 mounts a conduit box 14 to the motor 10. The conduit box 14 houses the connections of the motor power lead wires or motor leads 16 to an external power supply. A power cable (not illustrated) having wires that conduct electricity may be routed from an external power supply through a conduit, for example, to the box 14. As indicated, the wires within the power cable may connect to the power leads 16 inside the conduit box 14. In this embodiment, the incoming conduit (not illustrated) connects to the bottom 18 of the conduit box 14. However, the conduit (e.g., metal, polymer, etc.) may connect or enter the box at various locations on the box 14. Moreover, the conduit connections at the box may include typical conduit connections, such as threaded connections ranging from ¼ inch to 4 inch and greater in diameter, depending on the particular power application. Furthermore, the conduit box 14 may be top-mounted instead of side-mounted, and in general, may be mounted at different locations around the motor 10. A variety of configurations and features of the conduit box 14 may be provided. For example, the conduit box 14 may employ a grounding lug, a gasketed cover and may be constructed of a plastic material or metal (e.g., stainless steel), and so on.

In this embodiment, the motor 10 is an induction motor housed in an enclosure comprising a frame 20, front-end cap 22, and rear-end cap 24. The frame 20, front-end cap 22, and rear-end cap 24 form a protective shell, or housing, for a stator assembly 26 and a rotor assembly 28. Stator windings are electrically interconnected to form groups, and the groups are, in turn, interconnected. The windings are further coupled to motor leads 16 (i.e., terminal or power leads). The motor leads 16 are used to electrically connect the stator windings to an external power cable (not shown) coupled to a source of electrical power. Energizing the stator windings produces a magnetic field that induces rotation of the rotor assembly 28. As indicated, the electrical connection between the power leads and the power cable is housed within the conduit box 14.

In the embodiment illustrated, rotor assembly 28 comprises a cast rotor 30 supported on a rotary shaft 32. As will be appreciated by those skilled in the art, shaft 32 is configured for coupling to a driven machine element (not shown), for transmitting torque to the machine element. Rotor 30 and shaft 32 are supported for rotation within frame 20 by a front bearing set 34 and a rear bearing set 36 carried by front-end cap 22 and rear end cap 24, respectively. In the illustrated embodiment of electric motor 10, a cooling fan 38 is supported for rotation on the shaft 32 to promote convective heat transfer through the frame 20. The frame 20 generally includes features permitting it to be mounted in a desired application, such as integral mounting feet 40. As will be appreciated by those skilled in the art, however, a wide variety of rotor configurations may be envisaged in motors that may employ the techniques outlined herein, including wound rotors of the type shown, and so forth. Similarly, the present technique may be applied to a variety of motor types having different frame designs, mounting and cooling styles, and so forth.

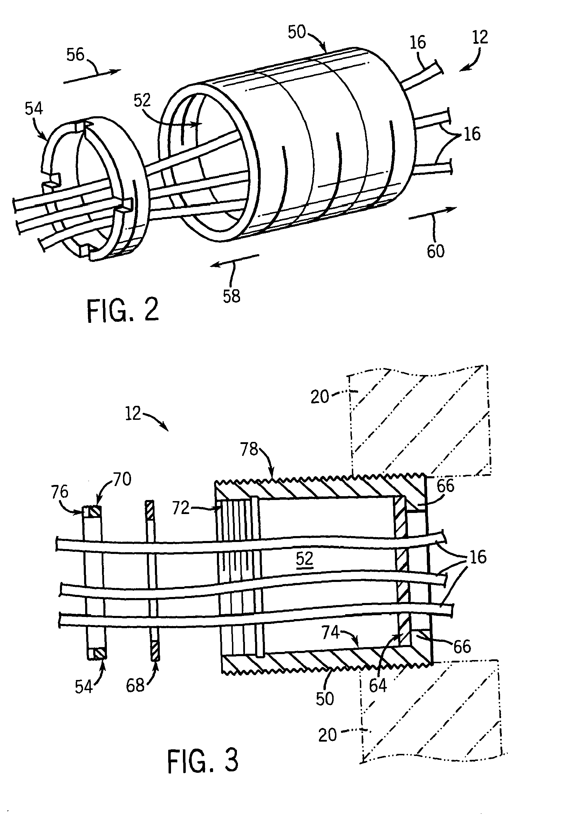

Referring to FIG. 2, a motor lead sealing assembly is shown and designated generally by the reference numeral 12. In the illustrated embodiment, the motor leads 16 from the motor 10 are pulled (i.e., from the right in the illustration) through the interior or inside of the nipple 50, designated as region 52, and into the conduit box 14. A potting material or sealing material (e.g., a fluid or elastomeric material, such as epoxy or urethane) may be poured inside the nipple (region 52) to provide a seal between the conduit box 14 and the motor 10 (and the environment). To compress the seal, a compression nut 54, as indicated by arrow 56, is rotated and threaded into the nipple 50. In this embodiment, an outer threaded surface of the compression nut 54 mates with the inner threaded surface of the nipple 50. Rotation and tightening of the nut 54 exerts a compressing force on the sealing material to advance the integrity of the seal. The sealing material is compressed against the inner surface of the nipple 50 and against the motor leads 16.

To install the motor lead sealing assembly 12, as indicated by arrow 58, the outer threaded surface of nipple 50 on one end of the nipple 50 mates with a threaded connection (fitting) on the conduit box 14 (see FIG. 1). The threaded outer surface at the other end of the nipple 50 threads into the motor 10 frame, as indicated by arrow 60. The motor lead sealing assembly 12 provides adequate support for mounting the conduit box 14 to the motor 10, and also provides for effective sealing of the entry of the motor leads 16 into the conduit box 14, and thus seals the motor lead connections in the conduit box 14 from the motor and the environment. It should be noted that the number of motor leads wires may vary from the three depicted, depending, for example, on the motor configuration. Moreover, other wiring and electrical connections may be protected and sealed in accordance with the present technique. For example, ground/neutral wiring connections, control wiring connections, and data-communication wiring connections, and so on, may be housed and protected in a conduit box 14.

FIG. 3 is a side view of a diagrammatical representation of the motor lead sealing assembly of FIG. 2. To the right of the assembly in the illustration, motor leads 16 enter from the motor 10 through the motor frame 20 and into the region 52 inside the nipple 50. The motor leads 16 are routed through a grommet 64 (dam) placed into the nipple 50 to prevent sealing material (e.g., cement, potting material, etc.) from escaping into the interior of the motor frame 20. The stops 66 hold the grommet 64 in place, the grommet 64 retaining the sealing material as the nut 54 is tightened. The grommet 64 may be constructed of a variety of materials, such as rubber, for example, with a hole configured (e.g., punched) for each motor lead wire 16.

To install the nut 54, which may employ a compression washer 68, the threaded outer (diameter) surface 70 of the nut 54 mates with the threaded inner (diameter) surface 72 of the nipple 50. As the nut 54 is rotated and tightened, a tapered inner (diameter) surface 74 of the nipple 50 may be provided to facilitate added compression of the sealing material in region 52. In this embodiment, spanner notches 76 receive a spanner wrench to rotate and install the nut 54. Finally, to secure the assembly 12 to the motor 10, the threaded outer (diameter) surface 78 of the nipple 50 mates with an appropriate fitting or connection on the motor frame 20.

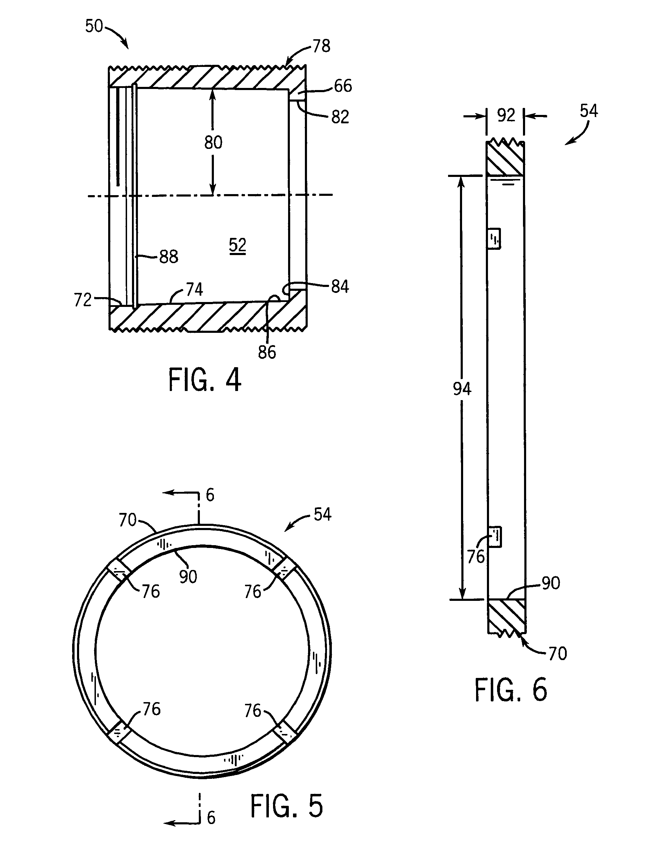

FIGS. 4, 5, and 6 further illustrate details of the lead sealing assembly 12. FIG. 4 is a side view of the nipple 50. After the sealing material is poured into the nipple 50 (in region 52), the tapered inner surface 74 is used in conjunction with the nut 54 to compress the sealing material. In this embodiment, the taper dimension 80 is 1°. However, it should be apparent that the tapered angle may vary, depending, for example, on the desired compressive force of the cement with the nipple 50. Again, the sealing material is retained by the grommet 64 which abuts the stops 66. The stops 66 include an extension 82 and abutment surfaces 84 and 86. Further, the inner threads 72 run until radial line 88, with the position of the radial line 88, and thus the length of the threads 72, configured in the axial direction to adjust the amount of compressive force that the nut 54 exerts on the sealing material. Lastly, outer threads 78 exist on both ends of the nipple 50 to couple the nipple 50 to the conduit box 14 and to the motor frame 20, respectively.

Referring to FIGS. 5 and 6, an end view and sectional view, respectively, of the compression nut 54, are depicted. The nut 54, having an inner surface 90, a length 92, and an inside diameter dimension 94, engages the nipple 50 to provide compressive force to the fluid seal material within region 52. Again, the threaded outer diameter 70 of the nut 54 mates with the inner diameter threads of the nipple 50. In certain embodiments, a spanner wrench may be used to rotate the nut 54 via exemplary spanner notches 76. The compression nut 54 may also abut a washer 68, if used, disposed on the nipple 50 side of the nut 54. In this example, the nut 54 provides a relatively large aperture for the motor leads 16 entering into the conduit box 14 from the nipple 50.

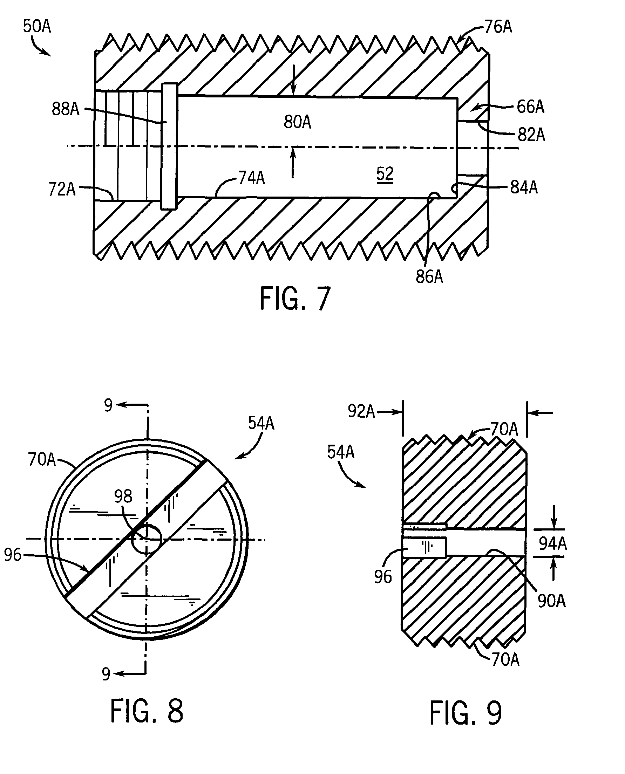

FIGS. 7, 8, and 9 depict alternate embodiments of the nipple 50A and the compression nut 54A. FIG. 7 is a side view of a pipe nipple 50A used in an alternate configuration of the motor lead sealing system 12. In contrast to the outer threads 76 of nipple 50 of FIG. 4, the outer threads 76A in this embodiment are continuous across the outer diameter of the nipple 50A. However, as with the nipple 50 of FIG. 4, the inner threads 72A cover a portion of the inner diameter of the nipple 50 until radial line 88A. Again, the axial length of the threaded portion 72A may be configured to specify the amount of compressive force that the nut 54A exerts on the sealing material disposed in the nipple 50A (interior region 52). Moreover, the alternate nipple 50A utilizes stops 66A having an extension 82A, and abutment surfaces 84A and 86A, in conjunction with a grommet 64A (not shown) to retain sealant poured in the interior of the nipple 50A (in region 52). To facilitate retention of the sealant or sealing material inside both nipples 50 and 50A discussed, the sealant may be allowed to cure prior to fully tightening the nut 52 and 52A, and, thus, prior to exerting the full compressive force of the nut 52 and 52A on the sealant.

FIGS. 8 and 9 illustrate an end view and a sectional view, respectively, of a nut 54A which mates with nipple 50A of FIG. 7. The nut 54A has an inner surface 90A, a length 92A, and an inside diameter dimension 94A. The threaded outer surface 70A mates with the threaded outer surface of 72A of the nipple 50A (FIG. 7). A slot 96 may be configured to receive a tool, such as screwdriver, to rotate and tighten the nut 54A into the nipple 50A. The inside diameter 98 provides a continuing pathway for the motor leads 16 into the conduit box 14.

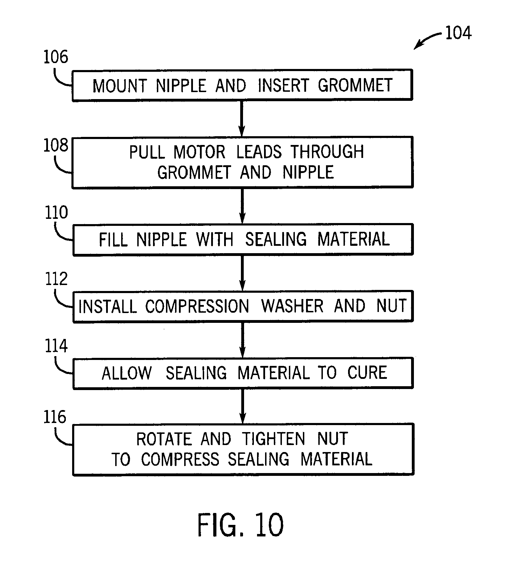

FIG. 10 is a block diagram of a method 104 for sealing motor leads 16 and their electrical connections to an external power supply. A nipple 50 may be mounted onto the frame 20 of the motor 10, as designated by reference numeral 106. Such mounting may be accomplished, for example, by screwing external male threads disposed on the outer diameter of nipple 50 into a female threaded connection on the motor frame 20. A dam or grommet 64 may be inserted into nipple, and the motor lead wires pulled through holes in the grommet 64 and through the interior region 52 of the nipple 50 (block 108). Sealing material, such as epoxy or urethane, may be poured into the interior region 52 of the nipple 50 (block 110). The nut 54 may be installed onto the nipple 50 via the threaded outer surface of the nut 54 mating with the threaded inner surface of the nipple 50 (block 112). A compression washer 68 may facilitate attachment of the nut 54 to the nipple 50. To better retain the sealing material inside the nipple 50, the sealing material may first be allowed to cure prior to fully tightening the nut 54 onto the nipple 50 (block 114). As the nut 54 is rotated and tightened onto the nipple 50, the nut 54 exerts a compressive force on the sealing material inside the nipple 50 (block 116). The sealing material is compressed against the inner surface of the nipple 50 and against the motor leads 16 disposed inside the nipple 50. The grommet 64 acting in concert with the stops 66 retains the sealing material within the nipple 50.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the spirit and scope of the invention as defined by the following appended claims.

In summary the invention discloses an assembly having an externally threaded pipe nipple with an inserted grommet couples to a motor frame and to a conduit box, supporting the conduit box to the motor frame and providing a pathway for the motor lead through the grommet and nipple into the conduit box. T conduit box configured to house motor lead connections to the incoming power supply. A sealing material, such as a fluid elastomeric material, is poured into the pipe nipple and allowed to cure. The grommet abuts against a stop portion of the pipe nipple, retaining the sealing material. A nut having external threads mates with internal threads of the pipe nipple. As the nut is rotated and tightened, it compresses the sealing material against the inner surface of the pipe nipple and against the motor lead wires, and thus sealing the electrical connections within the conduit box from the motor and environment.

## Claims

1. A motor comprising:
a motor enclosure having first and second end portions and a frame disposed between the end portions;
a stator assembly and rotor assembly disposed within the motor enclosure;
at least one motor lead wire electrically coupled to the stator assembly and configured to electrically connect to an external power supply;
a protective enclosure configured to house an electrical connection of the at least one motor lead wire to the external power supply;
a coupling member configured to mount the protective enclosure to the motor frame and to provide a sealable pathway for the at least one motor lead wire to enter the protective enclosure from the motor;
a sealing material disposed in an interior volume of the coupling member; and
a compressing member configured to mate to the coupling member to compress the sealing material against an inner surface of the coupling member and against the at least one motor lead wire.

2. The motor of claim 1, wherein:
the coupling member comprises a pipe nipple having external threads that mate with threads of the protective enclosure and with threads of the motor frame; and
the compressing member comprises a nut having external threads that mate with internal threads of the pipe nipple.

3. The motor of claim 2, wherein a distance of the internal threads of the pipe nipple is configured to provide a desired compressive force exerted by the nut on the sealing material.

4. The motor of claim 2, further comprising a compression washer disposed at an interface between the nut and pipe nipple, and
wherein an exterior surface of the nut is configured to receive a spanner wrench to rotate the nut.

5. The motor of claim 1, wherein the coupling member comprises an inner tapered surface configured to facilitate compression of the sealing material.

6. The motor of claim 1, further comprising a retaining member configured to receive the at least one motor lead wire and to substantially retain the sealing material from escaping the coupling member.

7. The motor of claim 6, wherein the retaining member comprises a grommet, and the sealing material comprises an elastomeric material.

8. The motor of claim 1, wherein the coupling member structurally supports the protective enclosure to the motor frame.

9. The motor of claim 1, wherein the protective enclosure comprises a conduit box.

10. A lead sealing assembly for a motor, comprising:
a fitting having external threads configured to mate with threads of an enclosure and with threads of a motor frame, the fitting having an interior region configured to provide a pathway for at least one wire from the motor to the enclosure, wherein the enclosure is configured to house electrical connections of the motor;
an externally threaded nut configured to mate with internal threads at one end of the fitting; and
a grommet disposed at a another end of the fitting and configured to receive the at least one wire,
wherein the nut and grommet partially seal the interior region of the fitting.

11. The assembly of claim 10, further comprising sealant disposed in the interior region of the fitting.

12. The assembly of claim 11, wherein an internal surface of the fitting is tapered to facilitate compression of the sealant in the interior region against the internal surface of the fitting and against the at least one wire from the motor, and wherein the grommet abuts an internal stop of the fitting and substantially retains the sealant.

13. The assembly of claim 11, wherein a distance of the internal threads of the fitting receiving the nut is configured to facilitate desired amounts of compressive force exerted by the nut on the sealant.

14. The assembly of claim 11, wherein the sealant comprises an epoxy or a urethane, or a combination thereof.

15. The assembly of claim 10, wherein the fitting comprises a pipe nipple and is configured to support the protective enclosure on a machine frame.

16. The assembly of claim 10, further comprising a compression washer configured to further secure the nut to the fitting.

17. The assembly of claim 10, wherein the enclosure comprises a conduit box, the at least one wire from the motor comprises a motor lead wire, and the electrical connections comprise a connection of the motor lead wire to a power supply cable wire.

18. The assembly of claim 10, wherein the electrical connections comprise a power supply connection, a ground wiring connection, a control wiring connection, or a data-communication wiring connection, or a combination thereof

19. A method of sealing machine leads, comprising:
pulling at least one motor lead through the inside of a coupling element;
mounting the coupling element to the motor frame;
pouring sealing material into the coupling element;
securing a compressing element to an end of the coupling element opposite the motor frame; and
mounting an enclosure to the end of the coupling element opposite the motor frame,
wherein the enclosure is configured to house an electrical connection of the at least one motor lead to a power supply.

20. The method of claim 19, comprising:
inserting a retaining member inside the coupling element, the retaining member configured to abut a stop disposed inside the coupling element and to retain the sealing material; and
pulling the at least one machine lead through the retaining member and the coupling element.

21. The method of claim 20, wherein the retaining member comprises a grommet.

22. The method of claim 19, comprising allowing the sealing material to cure.

23. The method of claim 19, comprising further securing the compressing element to the coupling element to exert compressive force on the sealing material, wherein the sealing material is compressed against an inner surface of the coupling element and against the at least one machine lead disposed within the coupling element.

24. The method of claim 23, wherein the inner surface of the coupling element is tapered to facilitate compression of the sealing material.

25. The method of claim 23, wherein the compressing element comprises external threads configured to mate with internal threads of the coupling element.

26. The method of claim 25, wherein:
securing the compressing element to the coupling element comprises rotating the compressing element into an end of the coupling element having the internal threads; and
further securing the compressing element comprises further rotating and tightening the compressing element into the end of the coupling having the internal threads.

27. The method of claim 19, wherein:
the coupling element comprises a pipe nipple having an external threads at each end of the pipe nipple, and mounting the pipe nipple to the motor frame comprises mating external threads of one end of the pipe nipple with a threaded portion of the motor frame; and
mounting the enclosure to the pipe nipple comprises mating external threads of another end of the pipe nipple with a threaded portion of the enclosure.

28. The method of claim 19, wherein the coupling element comprises a pipe nipple having an internally threaded surface, the compressing element comprises a nut having an externally threaded surface, and securing the nut to the pipe nipple comprises rotating the nut to mate the externally threaded surface of the nut with the internally threaded surface of the pipe nipple.

29. The method of claim 27, further comprising installing a compression washer in between the nut and the pipe nipple.

30. The method of claim 19, wherein the sealing material comprises an elastomeric material.

31. A system for sealing machine leads, comprising:
means for pulling at least one machine lead through the inside of a coupling element;
means for mounting the coupling element to the machine frame;
means for filling the coupling element with a sealing material;
means for securing a compressing element to an end of the coupling element opposite the machine frame; and
means for mounting an enclosure to the end of the coupling element opposite the machine frame, wherein the enclosure is configured to house an electrical connection of the at least one motor lead to a power supply.

32. The system of claim 31, comprising:
means for inserting a grommet inside the coupling element, the grommet configured to abuts a stop disposed inside the coupling element and to retain the sealing material, wherein the retaining member;
means for pulling the at least one machine lead through the grommet inside the coupling element; and
means for further securing the compressing element to the coupling element to exert compressive force on the sealing material, wherein the sealing material is compressed against an inner surface of the coupling element and against the at least one machine lead disposed within the coupling element,
wherein the coupling element comprises a pipe nipple, the compressing element comprises a nut, and the inner surface of the pipe nipple is tapered to facilitate compression of the sealing material.
